# NEUE EUROPÄISCHE PATENTSCHRIFT

(11) **EP 4 077 106 B2**
(45) Veröffentlichungstag und Bekanntmachung des Hinweises auf die Entscheidung über den Einspruch: **30.09.2026**
(45) Hinweis auf die Patenterteilung: 31.01.2024
(21) Anmeldenummer: 20838947.8
(22) Anmeldetag: 18.12.2020
(51) Int. Cl.: B62D 25/20, B62D 29/04, B62D 35/02

(54) **STRUKTURBAUTEIL AUS THERMOPLASTISCHEM KUNSTSTOFFMATERIAL FÜR EIN KRAFTFAHRZEUG, KRAFTFAHRZEUG MIT EINEM STRUKTURBAUTEIL SOWIE VERFAHREN ZUR HERSTELLUNG EINES STRUKTURBAUTEILS**
STRUCTURAL COMPONENT OF THERMOPLASTIC MATERIAL FOR A MOTOR VEHICLE, MOTOR VEHICLE HAVING A STRUCTURAL COMPONENT, AND METHOD FOR PRODUCING A STRUCTURAL COMPONENT
ÉLÉMENT STRUCTURAL EN MATIÈRE THERMOPLASTIQUE POUR UN VÉHICULE À MOTEUR, VÉHICULE À MOTEUR DOTÉ D'UN ÉLÉMENT STRUCTURAL ET PROCÉDÉ DE RÉALISATION D'UN ÉLÉMENT STRUCTURAL

(30) Priorität: 19.12.2019 DE 102019135323
(43) Veröffentlichungstag der Anmeldung: 26.10.2022
(73) Patentinhaber: Audi AG, 85045 Ingolstadt (DE); ElringKlinger AG, 72581 Dettingen/Erms (DE)
(72) Erfinder: RAUSCH, Julius, 74076 Heilbronn (DE); DITTMAR, Harri, 88167 Grünenbach (DE); EBERHARDT, Martin, 9463 Oberriet (CH); WOLF, Thomas, 73035 Göppingen (DE)
(74) Vertreter: Müller Hoffmann & Partner
(86) Internationale Anmeldenummer: PCT/EP2020/086949
(87) Internationale Veröffentlichungsnummer: WO 2021/123112

(56) Entgegenhaltungen:
- EP-A1- 2 990 308
- EP-B1- 2 990 308
- WO-A1-2016/201279
- DE-A1- 102015 110 137
- FR-A1- 3 076 804
- GB-A- 2 547 656

## Beschreibung

Die Erfindung betrifft ein flächiges Strukturbauteil gemäß dem Oberbegriff von Anspruch 1, insbesondere ein Unterbodenschutzelement oder ein Trennwandelement oder ein Abdeckelement, aus thermoplastischem Kunststoffmaterial für ein Kraftfahrzeug, insbesondere Elektrofahrzeug, ein Kraftfahrzeug mit einem solchen Strukturbauteil, insbesondere Unterbodenschutzelement, sowie ein Verfahren zur Herstellung eines solchen Strukturbauteils, insbesondere Unterbodenschutzelements.

Flächige Strukturbauteile, wie beispielsweise Unterbodenschutzelemente, für Kraftfahrzeuge werden bislang üblicherweise aus metallischen Bauteilen, beispielsweise Aluminiumblechen oder dergleichen, hergestellt. Solche metallischen Bleche können auch in einer mehrschichtigen Struktur eines Strukturbauteils, wie etwa einem Unterbodenschutzelement, vorgesehen sein.

Beispielhaft wird in Bezug auf Unterbodenschutzelemente bzw. Bodenschutzplatten auf die DE 10 2017 006 753 A1 , die DE 10 2015 103 902 A1 und die DE 10 2019 104 883 A1 verwiesen. Ferner wird in Bezug auf ein Strukturbauteil, das als Ablagefach für den Innenraum eines Kraftfahrzeugs ausgebildet ist, auf die US 2013/0280469 A1 hingewiesen. Die EP 3 002 119 A1 zeigt die Herstellung eines Kunststoffverbundwerkstoffs. Die EP 2 990 308 A1 zeigt teilweise die Merkmale der Präambel von Anspruch 1 und 10. Ein Strukturbauteil gemäß der Präambel von Anspruch 1 ist aus der Veröffentlichung "Kunststoffe international 6-7/2019", Carl Hanser Verlag, München bekannt, die auf Deutsch bzw. Englisch unter den folgenden Links abrufbar ist:
https://www.kunststoffe.de/a/fachartikel/mit-kleinen-blasen-grossrauskommen-149710;
https://en.kunststoffe.de/a/specialistarticle/making-it-big-with-small-bubbles-245214.

Unterbodenschutzelemente als Beispiel für die hier angesprochenen Strukturbauteile dienen insbesondere dazu, Druckbehälter bzw. Drucktanks oder/und elektrische Komponenten, wie etwa eine Hochvoltbatterie oder dergleichen, zu schützen, insbesondere beim Überfahren von Bodenunebenheiten, wie Schwellen, Pollerfallen, Randsteine und dergleichen. Unterbodenschutzelemente, die zumindest teilweise aus Metall bzw. Metallbelchen bestehen weisen dabei den Nachteil auf, dass sie beim Auffahren auf eine Bodenunebenheit dauerhaft verformt werden, d.h. es verbleibt in der Regel eine Beule, ein Knick oder dergleichen in dem Unterbodenschutzelement. Daneben weisen metallhaltige Unterbodenschutzelemente ein hohes Gewicht auf, was für die Gesamteffizienz des Kraftfahrzeugs nachteilig ist. Ähnliches gilt auch für Strukturbauteile, wie Trennwände oder Abdeckelemente, die bei Kraftfahrzeugen etwa als Deckel für eine Hochvoltbatterie oder als Trennwand zwischen Fahrzeugkomponenten eingesetzt werden. Auch bei derartigen Strukturbauteilen, die nicht zwingend eine äußere Begrenzung des Kraftfahrzeugs bilden, ist der Aspekt der Gewichtseinsparung bei gleichzeitig hoher Stabilität von großer Bedeutung.

Die der Erfindung zu Grunde liegende Aufgabe wird darin gesehen, ein Strukturbauteil, insbesondere ein Unterbodenschutzelement, und ein Verfahren zu dessen Herstellung anzugeben, um die obigen Nachteile vermeiden zu können.

Diese Aufgabe wird gelöst durch ein Strukturbauteil, wie etwa ein Unterbodenschutzelement, mit den Merkmalen des Patentanspruchs 1, und durch ein Verfahren mit den Merkmalen des Anspruchs 10. Vorteilhafte Ausgestaltungen mit zweckmäßigen Weiterbildungen sind in den abhängigen Patentansprüchen angegeben.

Vorgeschlagen wird also ein fächiges Strukturbauteil, insbesondere ein Unterbodenschutzelement, für ein Kraftfahrzeug, insbesondere Elektrofahrzeug, mit einem flächig ausgebildeten Kernelement aus einem ersten thermoplastischen Kunststoffmaterial, und mit wenigstens einer unteren und einer oberen Decklage aus einem zweiten faserverstärkten, thermoplastischen Kunststoffmaterial, wobei die Decklagen mit dem Kernelement, das aus einer zwischen den Decklagen aufgenommenen Spritzgussmasse oder einer zwischen den Decklagen aufgenommenen Fließpressmasse hergestellt ist, umgeformt und stoffschlüssig verbunden sind.

Durch die Verwendung von thermoplastischen Kunststoffmaterialien kann das Strukturbauteil kostengünstig hergestellt werden und weist ein geringes Gewicht auf. Für eine ausreichende Stabilität des Strukturbauteils sorgen insbesondere die faserverstärkten Decklagen. Die Verwendung von thermoplastischem Kunststoffmaterial hat auch den Vorteil, dass das Strukturbauteil elastischer ist verglichen mit einem metallhaltigen Strukturbauteil. Entsprechend treten bei einem beispielsweise als Unterbodenschutzelement ausgeführten Strukturbauteil aus thermoplastischem Kunststoffmaterial in der Regel keine plastischen Deformationen, wie Beulen oder Knicke auf, wenn das Unterbodenschutzelement mit Bodenunebenheiten in Kontakt kommt.

Da das Kernelement aus einer Spritzgussmasse oder einer Fließpressmasse hergestellt ist, wird das Kernelement, das zunächst als unförmige Kunststoffmaterialmasse vorliegt, urgeformt beim gemeinsamen Umformen mit den Decklagen.

Um die Stabilität des Strukturbauteils weiter zu verbessern, kann das erste thermoplastische Kunststoffmaterial faserverstärkt sein. Dabei kann das erste thermoplastische Kunststoffmaterial Langfasern aus Glas enthalten, wobei die Glasfasern vorzugsweise eine Länge von etwa 1 bis 50 mm, insbesondere 1 bis 10 mm aufweisen.

Das zweite thermoplastische Kunststoffmaterial kann Endlosfasern enthalten, wobei insbesondere Glasfasern, oder/und Karbonfasern oder/und Aramidfasern oder/und Naturfasern enthalten sein können. Dabei können die Decklagen aus einem Faserhalbzeug, insbesondere einem Organoblech, oder/und wenigstens einer Schicht eines UD-Tapes hergestellt sein.

Um beim Umformen eine optimale stoffschlüssige Verbindung zu erreichen, können das erste Kunststoffmaterial und das zweite Kunststoffmaterial bezüglich ihrer Materialeigenschaften kompatibel zueinander sein. Dabei kann insbesondere im Falle der faserverstärkten (ersten und zweiten) Kunststoffmaterialien die jeweilige Kunststoffmatrix aus dem gleichen Material hergestellt sein, insbesondere aus Polypropylen (PP) oder Polyamid (PA) hergestellt sein.

Das Strukturbauteil weist wenigstens einen im Kernelement und den Decklagen gemeinsam ausgebildeten Erhebungsabschnitt auf. Dabei kann der Erhebungsbereich eine Durchgangsöffnung aufweisen, die dazu eingerichtet ist, ein Verbindungselement aufzunehmen, das zur Befestigung des Strukturbauteils, insbesondere Unterbodenschutzelements, an einer Fahrzeugkarosserie vorgesehen ist. Derartige Erhebungsabschnitte können auch als tellerförmige Abschnitte bezeichnet werden. Die Erhebungsabschnitte können eine im Wesentlichen plane Erhebungsfläche aufweisen, die im angebrachten Zustand des Strukturbauteils, insbesondere Unterbodenschutzelements, an einem Karosseriebauteil anliegt.

Das Strukturbauteil weist wenigstens einen rippenartigen Versteifungsabschnitt auf, wobei der Versteifungsabschnitt aus dem ersten Kunststoffmaterial gebildet ist und wobei der Versteifungsabschnitt über eine Decklage vorsteht. Ein derartiger Versteifungsabschnitt erhöht die Stabilität des Strukturbauteils, insbesondere Unterbodenschutzelements. Der Versteifungsabschnitt ist auf einer der Decklagen ausgebildet.

Der Versteifungsabschnitt geht in den Erhebungsabschnitt über, wobei insbesondere zwischen zwei Erhebungsabschnitten wenigstens ein Versteifungsabschnitt ausgebildet ist. Mit anderen Worten können die Versteifungsabschnitte Verbindungsrippen zwischen benachbarten Erhebungsabschnitten bilden. Ferner können die Versteifungsabschnitte im Wesentlichen plane Rippenflächen aufweisen, die in die Erhebungsfläche übergehen, so dass das Strukturbauteil, insbesondere Unterbodenschutzelement, im angebrachten Zustand mittels der Erhebungsflächen und Rippenflächen an der Karosserie aufliegt.

Das Strukturbauteil weist dabei einen Randbereich auf der nur aus dem ersten Kunststoffmaterial gebildet ist und einstückig mit dem zwischen den Decklagen aufgenommenen Kernelement ausgebildet ist. Dabei sind in dem Randbereich mehrere Durchgangsöffnungen vorgesehen, die dazu eingerichtet sind, ein Verbindungselement aufzunehmen, das zur Befestigung des Strukturbauteils, insbesondere Unterbodenschutzelements, an einer Fahrzeugkarosserie vorgesehen ist. Die Randbereiche können auch so ausgestaltet sein, dass sie eine die Decklagen umgebende bzw. umlaufende Einfassung bilden.

Ein Kraftfahrzeug, insbesondere Elektrofahrzeug, mit einer Karosserie kann ein an der Karosserie befestigtes, oben beschriebenes Strukturbauteil, insbesondere Unterbodenschutzelement, aufweisen. Dabei kann das als Unterbodenschutzelement ausgeführte Strukturbauteil unterhalb von Energiespeichern angeordnet sein, insbesondere unterhalb von einer Hochvoltbatterie oder von einem Drucktank. Hierdurch können sensible Bauteile, wie eine Hochvoltbatterie bzw. ein Drucktank (beispielsweise für Gas) besonders gut geschützt werden.

Ein Verfahren zur Herstellung eines Strukturbauteils, insbesondere Unterbodenschutzelements, umfasst folgende Schritte:
Einbringen eines ersten thermoplastischen Kunststoffmaterials, das als ungeformte, insbesondere spritzgussfähige oder fließpressfähige, Kunststoffmaterialmasse bereitgestellt wird, zwischen einer unteren und einer oberen Decklage aus einem zweiten faserverstärkten, thermoplastischen Kunststoffmaterial;
gemeinsames Umformen des ersten Kunststoffmaterials und der Decklagen, wobei beim gemeinsamen Umformen das erste Kunststoffmaterial zwischen den Decklagen verteilt wird, derart dass es nach dem Umformen ein Kernelement bildet, das zumindest bereichsweise beidseitig von den Decklagen abgedeckt ist.

Vereinfacht ausgedrückt wird eine ungeformte bzw. unförmige erste Kunststoffmasse zwischen als Halbzeug bereitgestellte Decklagen gegeben und dann wird die zunächst unförmige erste Kunststoffmasse unter Druckeinwirkung zwischen den Decklagen urgeformt, so dass nach dem Umformen das urgeformte Kernelement mit den Decklagen stoffschlüssig verbunden ist und im Wesentlichen die gewünschte Endform bzw. Ausgestaltung des Unterbodenschutzelements aufweist.

Bei dem Verfahren können dem ersten thermoplastischen Kunststoffmaterial vor dem Einbringen zwischen die Decklagen Langfasern aus Glas beigemengt werden. Somit wird vor dem Umformen eine (glas-)faserverstärkte erste Kunststoffmasse bereitgestellt, wobei die dann (glas-)faserhaltige erste Kunststoffmasse zum Kernelement urgeformt wird.

Das Einbringen des ersten Kunststoffmaterials kann durch ein Fließpressverfahren erfolgen, bei dem die zwischen den Decklagen aufgenommene Kunststoffmasse mittels Druckeinwirkung verdrängt wird. Mit anderen Worten können in bzw. auf einem entsprechenden Presswerkezeug eine untere und eine obere Decklage bereitgestellt werden, wobei zwischen die Decklagen die Masse, beispielsweise in Form eines ungeformten bzw. unförmigen Klumpens, des ersten Kunststoffmaterials gegeben wird. Durch Schließen des Presswerkzeugs, wird das zunächst unförmige erste Kunststoffmaterial zwischen den beiden Decklagen verdrängt, so dass hieraus das Kernelement urgeformt wird, das stoffschlüssig mit den Decklagen verbunden ist, wobei die Decklagen aufgrund der Druckeinwirkung ebenfalls umgeformt werden.

Das Einbringen des ersten Kunststoffmaterials erfolgt durch ein Spritzgussverfahren bei dem das ungeformte bzw. unförmige Kunststoffmaterial zwischen die Decklagen eingespritzt wird. Bei einem Spritzgussverfahren wird das erste Kunststoffmaterial beim Einspritzen zwischen die Decklagen oder nach dem Einspritzen zwischen die Decklagen physikalisch oder chemisch geschäumt Durch das Schäumen des ersten Kunststoffmaterials kann ein geschäumtes, urgeformtes Kernelement zwischen den Decklagen erzeugt werden. Durch das Schäumen des ersten Kunststoffmaterials kann dessen Viskosität verringert werden, was die Verarbeitung bzw. das Spritgießen vereinfacht. Ferner kann durch das Schäumen eine Gewichtsreduktion erreicht werden.

Die Decklagen können insbesondere als faserverstärktes Halbzeug bereitgestellt werden, beispielsweise in Form einem Organoblech, oder/und wenigstens einer Schicht eines UD-Tapes.

Bei dem Verfahren erfolgt das Schäumen nach dem Einspritzen des ersten

Kunststoffmaterials durch Expansionsschäumen wobei betreffende Press- oder Gusswerkzeugelemente, insbesondere Werkzeughälften, oder Teile davon nach dem Einspritzen des ersten Kunststoffmaterials voneinander weg bewegt werden.

Dabei können die betreffenden Press- oder Gusswerkzeugelemente um etwa 0,5 bis 10 mm, insbesondere 1 bis 5 mm, voneinander weg bewegt werden. Das Auseinanderbewegen der Werkzeugelemente bzw. Werkzeughälften kann dabei insbesondere in Abhängigkeit von ihrer relativen Bewegungsrichtung zueinander und von ihrer Ausgestaltung größer oder weniger groß sein. Ein Volumenanteil von beim Expansionsschäumen entstandenen Hohlräumen im fertig umgeformten Kernelement kann etwa 10% bis 50% des festen Kunststoffmaterialvolumens betragen. Es ist aber auch möglich, dass der Anteil des Hohlraumvolumens größer ist als der Anteil des festen Kunststoffmaterialvolumens, insbesondere kann das Hohlraumvolumen auch das Doppelte oder Dreifache (200 bis 300%) betragen. In dem voneinander wegbewegten Zustand können die Werkzeugelemente auch während einer bestimmten Zeitdauer gehalten werden, so dass für das Aufschäumen des Kernmaterials durch Expansion ausreichend Zeit eingeräumt wird, gegebenenfalls inklusive einer Zeitspann zum Abkühlen und Aushärten der geschäumten Struktur.

Bei dem Verfahren wird auf wenigstens eine der Decklagen ein von der betreffenden Decklage vorstehendes Versteifungselement mittels Spritzgussverfahren mit oder ohne Schäumen aufgebracht.

Dabei wird das auf der betreffenden Decklage aufgebrachte Versteifungselement aus dem gleichen Kunststoffmaterial wie das Kernelement hergestellt.

Ferner ist es möglich, dass dem Kunststoffmaterial des aufgebrachten Strukturelements andere Anteile von Glasfasern oder Mineralien oder elastische Materialien beigemengt werden als dem ersten Kunststoffmaterial des Kernelements.

Hierdurch ist es möglich, nach oder gegebenenfalls auch bei dem sogenannten Urformen des Kernelements, was zusammen mit dem Umformen der Decklagen erfolgt, zusätzliche Strukturen mittels Spritzgussverfahren aufzubringen, wie beispielsweise Versteifungselemente bzw. -rippen oder Dichtungselemente oder vorstehende Randabschnitte oder dergleichen.

Weitere Vorteile und Einzelheiten der Erfindung ergeben sich aus der nachfolgenden Beschreibung von Ausführungsformen unter Bezugnahme auf die Figuren. Dabei zeigt:
Fig. 1 : eine Draufsicht auf eine Ausführungsform eines als Unterbodenschutzelements ausgeführten Strukturbauteils;
Fig. 2 : eine perspektivische Ansicht des Unterbodenschutzelements der Fig. 1 ;
Fig. 3 : in den Teilfiguren A) bis D) insbesondere vergrößerte Schnittansichten entlang der Schnittlinie III-III der Fig. 1 ;
Fig. 4 : in den Teilfiguren A) und B) jeweilige Vergrößerungen von Ausschnitten IVA und IVB der Fig. 2 ;
Fig. 5 : eine vereinfachte Schnittdarstellung des Unterbodenschutzelements der Fig. 3A kombiniert mit rein schematisch dargestellten Bauteilen eines Kraftfahrzeugs;
Fig. 6 : eine schematische Darstellung eines Herstellungsverfahrens für ein Unterbodenschutzelement;
Fig. 7 : in den Teilfiguren A) und B bzw. C) und D) schematisch und vereinfacht jeweils ein Strukturbauteil in einem Formwerkzeug beim Expansionsschäumen.

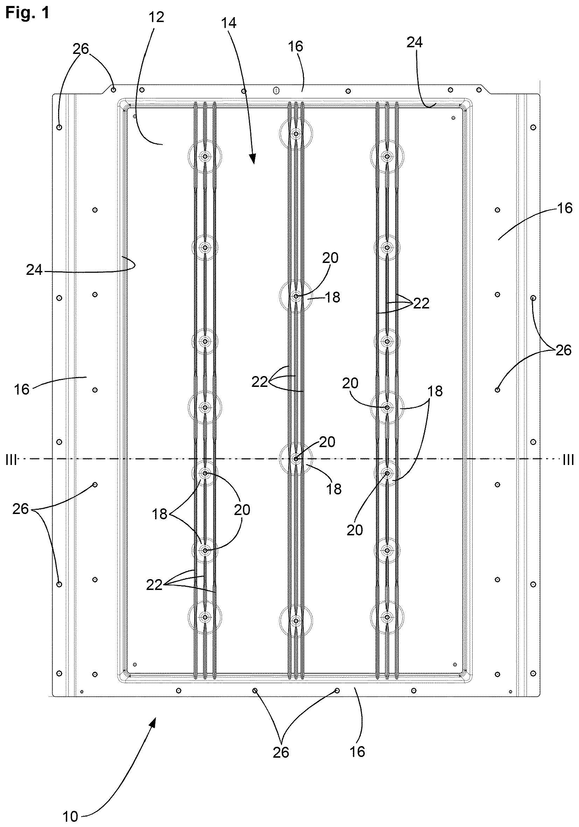

In Fig. 1 ist schematisch und vereinfacht eine Ausführungsform eines Strukturbauteils als Unterbodenschutzelement 10 in einer Draufsicht gezeigt. Die in dieser Darstellung sichtbare Oberseite 12 des Unterbodenschutzelements 10 ist in einem montierten Zustand des Unterbodenschutzelements 10 an einem (hier nicht gezeigten Kraftfahrzeug) einer Karosserie des Kraftfahrzeugs zugewandt.

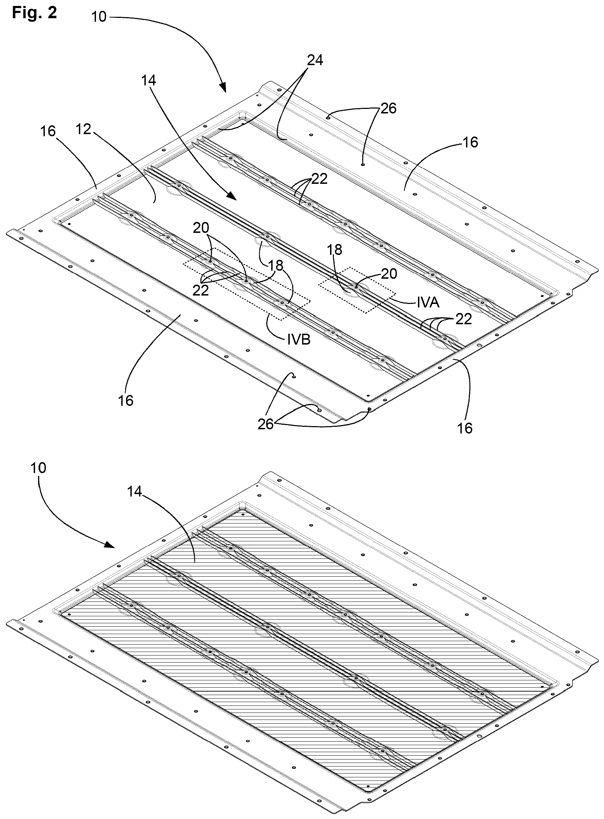

Das als Unterbodenschutzelement ausgeführte Strukturbauteil wird zunächst unter gleichzeitiger Bezugnahme auf die Figuren 1 und 2 beschrieben.

Das Unterbodenschutzelement 10 weist einen zentralen Bereich 14 auf, in dem das Unterbodenschutzelement 10 verstärkt ausgeführt ist. Der zentrale Bereich 14 ist in diesem Beispiel von einem umlaufenden Randbereich 16 umgeben. In dem zentralen Bereich 14 sind mehrere Erhebungsbereiche 18 ausgebildet. Die Erhebungsbereiche 18 können eine jeweilige Durchgangsöffnung 20 aufweisen. Durch eine solche Durchgangsöffnung 20 kann ein hier nicht dargestelltes Verbindungselement hindurchgeführt sein, das zur Befestigung des Unterbodenschutzelements 10 an einer Fahrzeugkarosserie vorgesehen ist. Wie aus den Darstellungen der Fig. 1 und 2 ersichtlich, können die Erhebungsbereiche 18 unterschiedlich groß sein, insbesondere unterschiedliche Durchmesser aufweisen. Ferner können sie an verschiedenen Stellen des Unterbodenschutzelements 10 bzw. seines zentralen Bereichs 14 angeordnet sein.

Ferner weist das Unterbodenschutzelement 10 mehrere rippenartige Versteifungsabschnitte 22 auf. Im gezeigten Beispiel erstrecken sich die Versteifungsabschnitte 22 entlang einer Längsrichtung Y. Insbesondere verlaufen die die Versteifungsabschnitte zwischen jeweils benachbarten Erhebungsbereichen 18.

Wie insbesondere aus der Fig. 2 ersichtlich, ist der zentrale Bereich 14 als eine Art Wanne ausgebildet. Dabei wird die Wanne durch geneigte oder/und gestufte Wandabschnitte 24 begrenzt. Die Wandabschnitte 24 bilden in diesem Beispiel den Übergang von dem zentralen Bereich 14 zu dem umgebenden Randbereich 16. In dem Randbereich können weitere Durchgangsöffnungen 26 angeordnet sein, die zur Aufnahme von Verbindungselementen dienen, um das Unterbodenschutzelement 10 an einem Kraftfahrzeug zu befestigen. Rein beispielhaft und zum besseren Verständnis ist in Fig. 2 das Unterbodenschutzelement 10 mit schraffiertem zentralem Bereich 14 als untere Darstellung gezeigt.

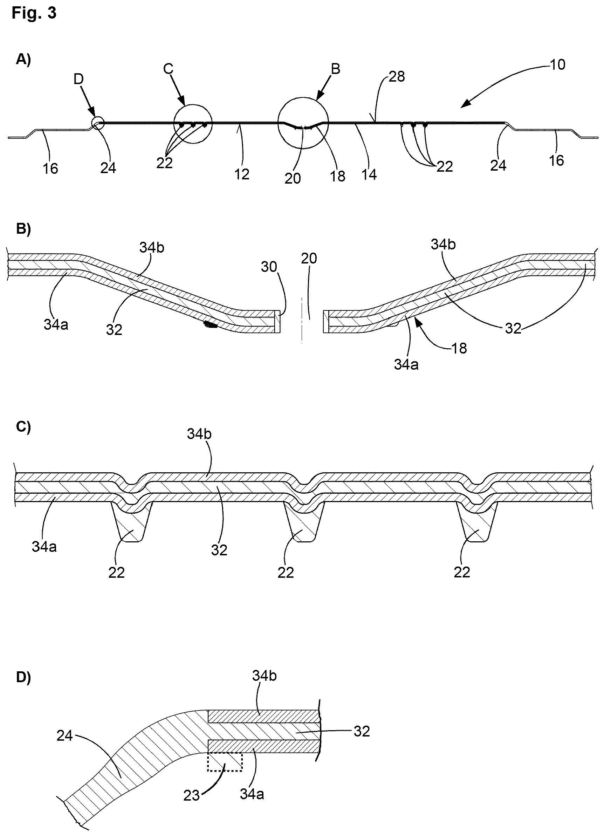

In Fig. 3 sind in den Teilfiguren A) bis D) Schnittdarstellungen entsprechend der Schnittlinie III-III der Fig. 1 gezeigt. Fig. 3A zeigt dabei das gesamte Unterbodenschutzelement 10. Die Fig. 3B bis 3D zeigen vergrößerte Ausschnitte entsprechend den eingekreisten Bereichen B bis D der Fig. 3A. Anhand der Schnittdarstellungen der Fig. 3A-D wird nachfolgend der Aufbau des Unterbodenschutzelements 10 beschrieben.

Fig. 3A zeigt das Unterbodenschutzelement 10 in seiner gesamten Breite (entlang der X-Richtung). Ersichtlich sind, wie bereits unter Bezugnahme auf die Figuren 1 und 2 beschrieben, der Randbereich 16, der zentrale Bereich 14, ein Erhebungsbereich 18 mit Durchgangsöffnung 20, mehrere Versteifungsabschnitte 22 sowie die geneigten oder/und gestuften Wandabschnitte 24. In der gewählten Darstellung weist die Oberseite 12 des Unterbodenschutzelements 10 nach unten. Eine Unterseite 28 des Unterbodenschutzelements 10 weist in der Darstellung nach oben. Die Unterseite 28 des Unterbodenschutzelements 10 ist in einem angebrachten Zustand an einem Kraftfahrzeug einem Untergrund bzw. Boden zugewandt, auf dem das Kraftfahrzeug steht.

In Fig. 3B ist beispielhaft ein Erhebungsbereich 18 gezeigt mit darin ausgebildeter Durchgangsöffnung 20. In die Durchgangsöffnung 20 keine eine Hülse 30, insbesondere eine metallische Hülse, eingesetzt sein. Aus der Schnittdarstellung der Fig. 3B bis 3D ist auch der innere Aufbau des Unterbodenschutzelements 10 ersichtlich.

Das Unterbodenschutzelement 10 kann insbesondere in seinem zentralen Bereich 14 ein Kernelement 32 aufweisen. Das Kernelement 32 kann zwischen einer oberen Decklage 34a und einer unteren Decklage 34b angeordnet sein.

Dabei kann das Kernelement 32 aus einem ersten thermoplastischen Kunststoffmaterial hergestellt sein. Das erste Kunststoffmaterial des Kernelements 32 kann faserverstärkt sein, insbesondere kann es lange Glasfasern enthalten, die beispielsweise eine Länge von etwa 1 bis 50 mm, insbesondere 1 bis 10 mm aufweisen.

Die Decklagen 34a, 34b können aus einem zweiten, faserverstärkten thermoplastischen Kunststoffmaterial hergestellt sein. Dabei kann das zweite thermoplastische Kunststoffmaterial Endlosfasern enthalten, wobei insbesondere Glasfasern, oder/und Karbonfasern oder/und Aramidfasern oder/und Naturfasern enthalten sind. Die Decklagen 34a, 34b können insbesondere aus einem Faserhalbzeug, insbesondere einem Organoblech, oder/und wenigstens einer Schicht eines UD-Tapes hergestellt sein.

Das erste Kunststoffmaterial des Kernelements 32 und das zweite Kunststoffmaterial der Decklagen 34a, 34b können bezüglich ihrer Materialeigenschaften kompatibel zueinander sein. Dabei kann insbesondere im Falle der faserverstärkten Kunststoffmaterialien für das Kernelement 32 und die Decklagen 34a, 34b die jeweilige Kunststoffmatrix aus dem gleichen Material hergestellt sein. Als Kunststoffmaterialien kommen insbesondere die Thermoplasten Polypropylen (PP) oder Polyamid (PA) in Frage. Selbstverständlich können auch andere thermoplastische Kunststoffe eingesetzt werden, insbesondere ist es auch denkbar das geeignete Polymerblends oder Polymerlegierungen für das Kernelement 32 oder/und die Decklagen 34a, 34b eingesetzt werden.

Wie aus der Fig. 3C ersichtlich, sind im Bereich der rippenartigen Versteifungsabschnitte 22 die Decklagen 34a, 34b zusammen mit dem Kernelement 32 umgeformt. Die jeweiligen von der (oberen) Decklage 34a vorstehenden Versteifungsabschnitte 22 bzw. Versteifungsrippen können aus dem gleichen Kunststoffmaterial hergestellt sein wie das Kernelement 32.

Aus der Fig. 3D ist ersichtlich, dass in dem Übergangsbereich von dem zentralen Bereich 14 in den Randbereich 16, insbesondere im Bereich der geneigten oder/und gestuften Wandabschnitte 24, die Decklagen 34a, 34b enden. Mit anderen Worten werden die Randbereiche 16 oder/und die Wandabschnitte 24 durch das erste thermoplastische Kunststoffmaterial gebildet. Sie sind also aus dem gleichen Material hergestellt wie das Kernelement 32 des Unterbodenschutzelements 10. Wie aus der Fig. 3D ersichtlich sind das Kernelement 32 und die Wandabschnitte 24 oder/und die Randbereiche 16 einstückig miteinander ausgebildet. Ferner ist in Fig. 3D ein optionales Dichtungselement 23 dargestellt. Das Dichtungselement 23 kann aus dem gleichen Kunststoffmaterial hergestellt sein wie das Kernelement 32. Alternativ kann das Dichtungselement 23 aus dem gleichen Basiskunststoff hergestellt sein, aber andere Zusätze enthalten, wie beispielsweise Fasern, Mineralien oder elastische Komponenten.

Aus der Zusammenschau der Figuren 1 bis 3 kann auch gesagt werden, dass innerhalb des zentralen Bereichs 14 des Unterbodenschutzelements 10 die Decklagen 34a, 34b und das Kernelement 32 ausgebildet sind. Ferner sind die Decklagen 34a, 34b mit dem Kernelement 32 gemeinsam umgeformt und stoffschlüssig verbunden.

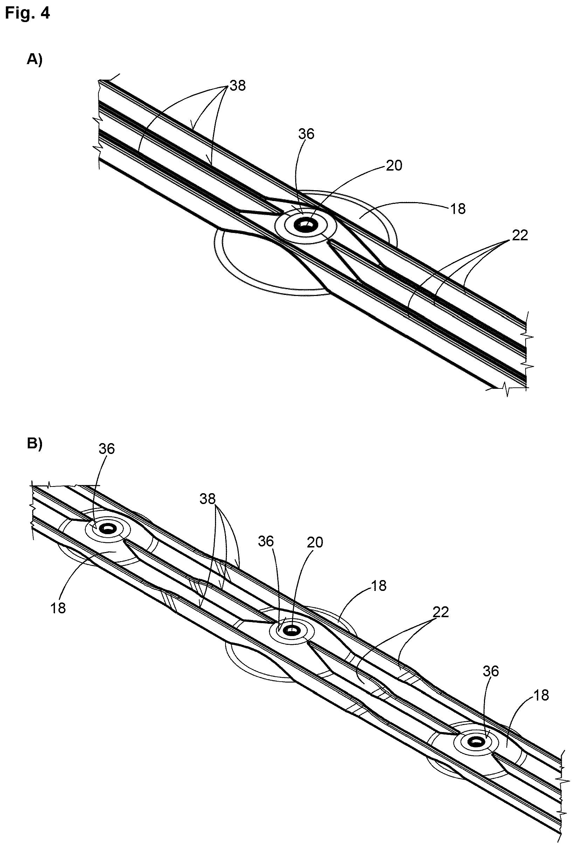

Fig. 4 zeigt in den Teilfiguren A) und B) Vergrößerungen der jeweiligen Bereiche IVA und IVB der Fig. 2. Anhand dieser beiden Figuren ist ersichtlich, dass die Versteifungsabschnitte 22 bzw. Versteifungsrippen in die Erhebungsbereiche 18 übergehen. Die Erhebungsabschnitte 18 können eine im Wesentlichen plane Erhebungsfläche 36 aufweisen, die im angebrachten Zustand des Unterbodenschutzelements 10 an einem Karosseriebauteil anliegt. Die Versteifungsabschnitte 22 können im Wesentlichen plane Rippenflächen 38 aufweisen, die in die Erhebungsfläche 36 übergehen, so dass das Unterbodenschutzelement im angebrachten Zustand mittels der Erhebungsflächen 36 und Rippenflächen 38 an der Karosserie aufliegt. Es wird darauf hingewiesen, dass das Aufliegen der Rippenflächen 38 nicht zwingend vollflächig erfolgen muss, sondern dass sich das Aufliegen bzw. Anliegen an einem Karosseriebauteil auch auf den Bereich bzw. Umkreis beschränken kann, in dem ein Erhebungsbereich 18 ausgebildet ist.

Im gezeigten Beispiel der Fig. 4A und 4B gehen jeweils die Rippenflächen 38 von einem mittleren Versteifungsabschnitt 22 in die Erhebungsfläche 36 über. Die jeweils links bzw. rechts des mittleren Versteifungsabschnitts 22 angeordneten Versteifungsabschnitte weisen Rippenflächen 38 auf, die auch im Bereich des Erhebungsbereichs 18 durchgehend ausgebildet sind.

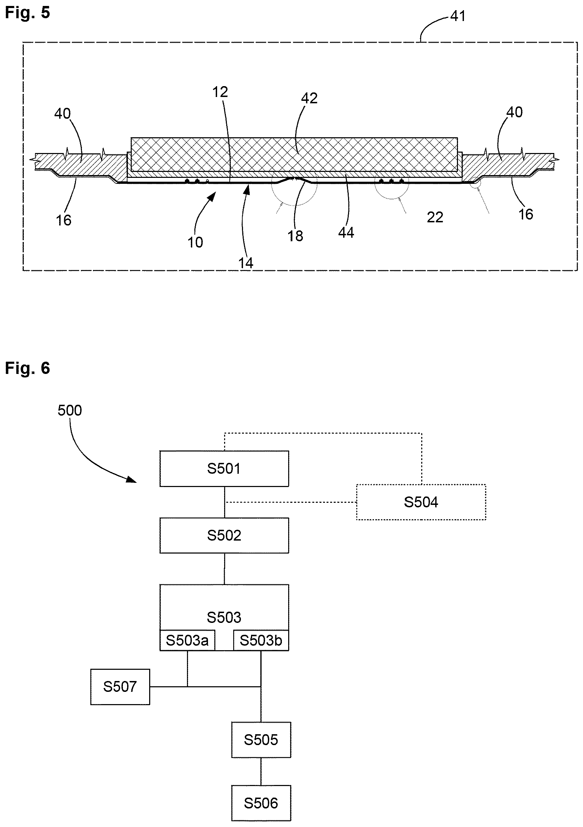

In der Fig. 5 ist rein schematisch und vereinfacht eine Schnittdarstellung mit dem Unterbodenschutzelement 10 in einer montierten Stellung dargestellt. Das Unterbodenschutzelement 10 ist mit seiner Oberseite 12 Karosseriebauteilen 40 eines ansonsten nur durch ein gestricheltes Rechtecks repräsentierten Kraftfahrzeugs 41 zugewandt. Im gezeigten Beispiel ist der zentrale Bereich 14 des Unterbodenschutzelements unterhalb einer Hochvoltbatterie 42 angeordnet, die vereinfacht und ohne weitere Details als rechteckiger Block dargestellt ist. Die Hochvoltbatterie 42 ist mittels einer Stützstruktur 44, beispielsweise einem wannenartigen Bodenelement oder dergleichen, mit der Karosserie 40 des Kraftfahrzeugs verbunden. Wie aus der Darstellung ersichtlich, liegt der Erhebungsbereich 18 (bzw. liegen die mehreren Erhebungsbereiche 18) des Unterbodenschutzelements 10 an der Unterseite der Stützstruktur 44 an und ist (bzw. sind) mit dieser verbunden, beispielsweise verschraubt. Das Unterbodenschutzelement 10 ist so an dem Kraftfahrzeug angeordnet, dass insbesondere die Hochvoltbatterie 42 gegen einen Aufprall von unten geschützt ist.

Das Unterbodenschutzelement 10 ist also insbesondere dafür eingerichtet, eine Hochvoltbatterie 42 eines Elektrofahrzeugs zu schützen. Alternativ kann das Unterbodenschutzelement 10 auch dazu eingesetzt werden, einen Drucktank bzw. Druckbehälter, beispielsweise einen CNG-Tank oder dergleichen, zu schützen.

Das oben in der Ausführungsform als Unterbodenschutzelement 10 beschriebene Strukturbauteil kann auch für andere Zwecke eingesetzt werden. Insbesondere kann das Strukturbauteil als Trennwand oder als Abdeckelement oder als Deckel in einem Kraftfahrzeug bzw. bei Kraftfahrzeugkomponenten eingesetzt bzw. verwendet werden. Beispielsweise ist es denkbar, dass ein als Deckel ausgeführtes Strukturbauteil in einem Gehäuse einer Hochvoltbatterie eingesetzt wird. Ferner kann ein als Trennwand ausgeführtes Strukturbauteil beispielsweise dazu verwendet werden, unterschiedliche Bereiche oder Kompartimente eines Kraftfahrzeugs voneinander zu trennen, beispielsweise Gepäckraum und Passagierraum oder Motorraum und Passagierraum oder dergleichen.

Wie oben unter Bezugnahme auf die Fig. 3 bereits erwähnt, ist das als Unterbodenschutzelement ausgeführte Strukturbauteil durch das Kernelement 32 und die Decklagen 34a, 34b gebildet. Dabei kann das Strukturbauteil, insbesondere als Unterbodenschutzelement 10, gemäß einem nachfolgend beschriebenen Verfahren hergestellt werden, das als schematisches Diagramm in Fig. 6 dargestellt ist.

Bei dem Verfahren 500 zur Herstellung eines Strukturbauteils, insbesondere Unterbodenschutzelements 10, wird gemäß einem Schritt S501 ein erstes thermoplastisches Kunststoffmaterial als ungeformte, insbesondere spritzgussfähige oder fließpressfähige, Kunststoffmaterialmasse bereitgestellt. Gemäß einem Schritt S502 wird die Kunststoffmaterialmasse zwischen einer unteren und einer oberen Decklage 34a, 34b aus einem zweiten faserverstärkten, thermoplastischen Kunststoffmaterial eingebracht. In einem Schritt S503 erfolgt ein gemeinsames Umformen des ersten Kunststoffmaterials und der Decklagen 34a, 34b, wobei beim gemeinsamen Umformen das erste Kunststoffmaterial zwischen den Decklagen 34a, 34b verteilt wird, derart dass es nach dem Umformen ein Kernelement 32 bildet, das zumindest bereichsweise beidseitig von den Decklagen 34a, 34b abgedeckt ist.

Gemäß einem optionalen Schritt S504 können dem ersten thermoplastischen Kunststoffmaterial vor dem Einbringen zwischen die Decklagen 34a, 34b Langfasern aus Glas beigemengt werden. Dieser Schritt S504 kann auch noch vor dem Schritt S501 erfolgen, so dass die bereitgestellte erste Kunststoffmaterialmasse bereits entsprechende Glasfasern enthält.

Das Einbringen des ersten Kunststoffmaterials (S503) kann durch ein Fließpressverfahren S503a erfolgen, bei dem die zwischen den Decklagen 34a, 34b aufgenommene Kunststoffmasse mittels Druckeinwirkung verdrängt wird.

Alternativ oder ergänzend kann das Einbringen des ersten Kunststoffmaterials (S503) durch ein Spritzgussverfahren S503b erfolgen, bei dem das Kunststoffmaterial zwischen die Decklagen 34a, 34b eingespritzt wird.

Bei einem Spritzgussverfahren gemäß Schritt S503b kann das erste Kunststoffmaterial beim Einspritzen zwischen die Decklagen 34a, 34b oder nach dem Einspritzen zwischen die Decklagen 34a, 34b physikalisch oder chemisch geschäumt werden.

Gemäß einem Schritt S505 kann bei dem Verfahren 500 das Schäumen nach dem Einspritzen des ersten Kunststoffmaterials durch Expansionsschäumen erfolgen. Dabei stellt das Expansionsschäumen eine Art des physikalischen Schäumens dar. Bei einem solchen Expansionsschäumen werden betreffende Press- oder Gusswerkzeugelemente, insbesondere Werkzeughälften, oder Teile davon, nach dem Einspritzen des ersten Kunststoffmaterials voneinander weg bewegt (S506). Die betreffenden Press- oder Gusswerkzeugelemente können bei Schritt S506 um etwa 0,5 bis 10 mm, insbesondere 1 bis 5 mm, voneinander weg bewegt werden. Nach dem Durchführen des Expansionsschäumen (S505, S506) kann ein Volumenanteil von beim Expansionsschäumen entstandenen Hohlräumen im fertig umgeformten Kernelement etwa 10% bis 50% des festen Kunststoffmaterialvolumens betragen.

Bei dem Verfahren 500 wird gemäß einem Schritt S507 auf wenigstens eine der Decklagen 34a, 34b ein von der betreffenden Decklage 34a, 34b vorstehendes Versteifungselement 22 (Fig. 3C, Fig. 4) oder Dichtungselement 23 (FIG. 3D), mittels Spritzgussverfahren mit oder ohne Schäumen aufgebracht. Dabei wird das auf der betreffenden Decklage 34a, 34b aufgebrachte Versteifungselement 22 aus dem gleichen Kunststoffmaterial wie das Kernelement 32 hergestellt. Beim Verfahren können dem Kunststoffmaterial des aufgebrachten Versteifungselements 22 (Fig. 3C, Fig. 4) andere Anteile von Glasfasern oder Mineralien oder elastische Materialien beigemengt werden als dem ersten Kunststoffmaterial des Kernelements 32.

Durch das Schäumen des ersten Kunststoffmaterials kann ein geschäumtes, urgeformtes Kernelement zwischen den Decklagen erzeugt werden. Wenn nicht das oben beschriebene Expansionsschäumen (S505, S506) angewendet wird, kann durch das Schäumen des ersten Kunststoffmaterials dessen Viskosität verringert werden, was die Verarbeitung bzw. das Spritzgießen vereinfacht.

Durch jede Art des Schäumens kann eine Gewichtsreduktion erreicht werden.

Bei dem Schritt S503 des Einbringens des ersten Kunststoffmaterials erfolgt also ein gemeinsames Umformen der zunächst unförmigen ersten Kunststoffmaterialmasse und der beispielsweise als UD-Tape oder Organoblech bereitgestellten Decklagen. Dabei wird die erste Kunststoffmasse sogenannt urgeformt, also von einem im Wesentlichen ungeformten Zustand in seine Endform gebracht, was insbesondere durch Materialeintrag unter Druck erreicht wird. Selbstverständlich sind für das Urformen des ersten Kunststoffmaterials, aus dem dann das Kernelement 32 gebildet wird, entsprechende Formwerkzeuge oder/und Presswerkezeuge oder/und Spritzgießwerkzeuge einzusetzen, die das oben erwähnte Fließpressverfahren oder Spritzgussverfahren unter Verwendung der Decklagen 34a, 34b ermöglichen.

Mit anderen Worten wird eine ungeformte erste Kunststoffmasse zwischen als Halbzeug bereitgestellte Decklagen 34a, 34b gegeben und dann wird die erste Kunststoffmasse unter Druckeinwirkung zwischen den Decklagen 34a, 34b urgeformt, so dass nach dem Umformen das urgeformte Kernelement 32 mit den Decklagen 34a, 34b stoffschlüssig verbunden ist und im Wesentlichen die gewünschte Endform bzw. Ausgestaltung des Unterbodenschutzelements 10 aufweist.

Das Fließpressverfahren und das Spritzgussverfahren können, wie dies bereits oben unter Bezugnahme auf den Schritt S507 angedeutet worden ist, auch kombiniert eingesetzt werden, was beispielsweise aus der Fig. 3C ersichtlich ist. Während das erste Kunststoffmaterial für das Kernelement 32 mittels Fließpressen zwischen den Decklagen 34a, 34b verteilt worden ist und das Kernelement und die Decklagen 34a, 34b gemeinsam umgeformt und stoffschlüssig miteinander verbunden worden sind, können die Versteifungsabschnitte 22 bzw. Versteifungsrippen, die aus dem gleichen Kunststoffmaterial wie das Kernelement 32 hergestellt sind, auf die obere Decklage 34a spritzgegossen werden.

Alternativ ist es auch denkbar, dass die betreffende Decklage 34a im Bereich der Versteifungsabschnitte 22 aufgebrochen wird oder ggf. schon vorher Sollbruchstellen bzw. Schlitze eingebracht sind, so dass beim Fließpressen das erste Kunststoffmaterial austreten kann. In einem solchen Falle wären die Versteifungsabschnitte 22 nicht auf der Decklage 34a angeordnet, sondern einstückig mit dem Kernelement 32 verbunden.

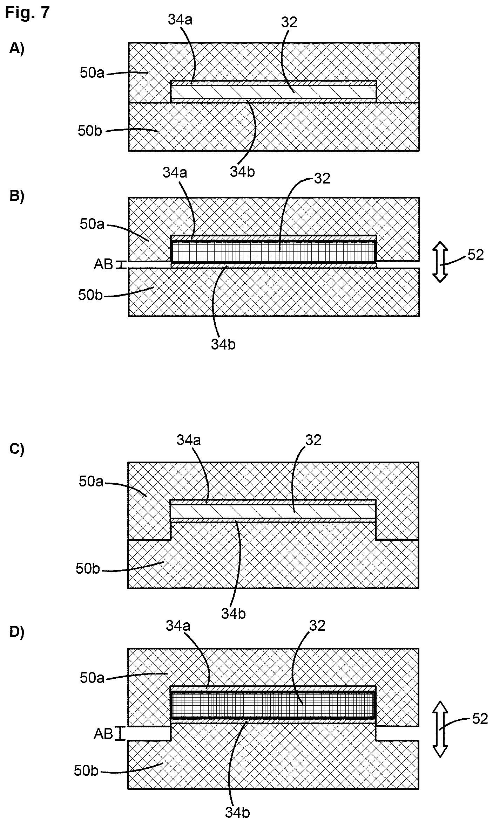

Die oben erwähnten Verfahrensschritte S505 und S506, die das Expansionsschäumen betreffend werden nachfolgend unter Bezugnahme auf die Fig. 7 noch etwas genauer erläutert.

In Fig. 7 ist in den Teilfiguren A) und C) jeweils ein Zustand gezeigt, in dem Werkzeugelemente bzw. Werkzeughälften 50a, 50b gegeneinander gepresst sind. Innerhalb eines durch die Werkzeugelemente 50a, 50b gebildeten Hohlraums bzw. Formraums sind die beiden Decklagen 34a, 34b angeordnet und das erste Kunststoffmaterial des Kernelements 32 ist zwischen den Decklagen 34a, 34b eingespritzt worden, wie dies oben unter Bezugnahme auf Schritt S503b (Fig. 6) bereits erläutert worden ist.

In Fig. 7 ist in den Teilfiguren B) und D) jeweils ein Zustand gezeigt, in dem die Werkzeugelemente bzw. Werkzeughälften 50a, 50b voneinander wegbewegt worden sind, was durch den jeweiligen Doppelpfeil 52 illustriert ist. Durch das Bewegen der Werkzeughälften 50a, 50b relativ zueinander kann das eingespritzte Kunststoffmaterial des Kernelements 32 expandieren. Dabei bilden sich in dem Kernelement 32 Blasen bzw. Hohlräume aus. Der (expansions-)geschäumte Zustand des Kernelements 32 ist in den Fig. 7B) und 7D) jeweils durch die orthogonal gekreuzte Schraffur vereinfacht illustriert.

Wie aus der Fig. 7 ersichtlich, kann ein Abstand AB, der zwischen den Werkzeugelementen bzw. Werkzeughälften 50a, 50b gebildet wird beim voneinander Wegbewegen je nach Ausgestaltung der Werkzeugelemente 50a, 50b kleiner (Fig. 7B) oder größer (Fig. 7D) sein.

Bei dem Beispiel der Fig. 7A /B können die Werkzeughälften 50a, 50b beispielsweise nur wenig, etwa in der Größenordnung von 0,5mm bis 2 mm voneinander weg bewegt werden, damit nur wenig oder kein Kunststoffmaterial in den entstehenden Spalt zwischen den Werkzeughälften 50a, 50b austritt.

Bei dem Beispiel der Fig. 7C /D ist die untere Werkzeughälfte 50b mit einem nach oben vorstehendende Formabschnitt ausgeführt, der im zusammengepressten Zustand (Fig. 7C) in die obere Werkzeughälfte 50a eingeführt ist. Entsprechend können die beiden Werkzeughälften 50a, 50b gemäß Fig. 7D um einen größeren Abstand AB bzw. Weg voneinander entfernt bzw. weg bewegt werden. Bei einem Beispiel gemäß Fig. 7C /D kann ein Abstand von bis zu 10mm ermöglicht werden. Aufgrund der Ausgestaltung der Werkzeughälften 50a, 50b der Fig. 7C /D ist zum einen das Expansionsschäumen des Kernelements 32 möglich, wobei ein Austritt von Kunststoffmaterial in den Spalt zwischen den Werkzeughälften 50a, 50b verhindert ist.

Es wird darauf hingewiesen, dass beim Aufbringen von weiteren Strukturelement, wie beispielsweise Versteifungsabschnitten 22 (Fig. 3C, Fig. 4), mittels Spritzgussverfahren wahlweise auch oben beschriebene Techniken des Expansionsschäumen angewendet werden können, selbstverständlich unter Verwendung von dafür ausgelegten Formwerkzeugen.

## Patentansprüche

1. Flächiges Strukturbauteil (10), insbesondere Unterbodenschutzelement (10), für ein Kraftfahrzeug (41), insbesondere Elektrofahrzeug, mit
einem flächig ausgebildeten Kernelement (32) aus einem ersten thermoplastischen Kunststoffmaterial,
wenigstens einer unteren und einer oberen Decklage (34a, 34b) aus einem zweiten faserverstärkten, thermoplastischen Kunststoffmaterial, wobei die Decklagen (34a, 34b) mit dem Kernelement (32), das aus einer zwischen den Decklagen (34a, 34b) aufgenommenen Spritzgussmasse oder einer zwischen den Decklagen (34a, 34b) aufgenommenen Fließpressmasse hergestellt ist, umgeformt und stoffschlüssig verbunden sind,
wobei das Strukturbauteil (10) wenigstens einen Randbereich (16) aufweist, der nur aus dem ersten Kunststoffmaterial gebildet ist und einstückig mit dem zwischen den Decklagen (34a, 34b) aufgenommenen Kernelement (32) ausgebildet ist, und
wobei in dem Randbereich (16) mehrere Durchgangsöffnungen (26) vorgesehen sind, die dazu eingerichtet sind, ein Verbindungselement aufzunehmen, das zur Befestigung des Strukturbauteils (10) an einer Fahrzeugkarosserie (40) vorgesehen ist,
es wenigstens einen im Kernelement (32) und den Decklagen (34a, 34b) gemeinsam ausgebildeten Erhebungsabschnitt (18) aufweist,
**dadurch gekennzeichnet, dass** es wenigstens einen rippenartigen Versteifungsabschnitt (22) aufweist, wobei der Versteifungsabschnitt (22) aus dem ersten Kunststoffmaterial gebildet ist und wobei der Versteifungsabschnitt (22) auf einer der Decklagen (34a) ausgebildet ist und über die betreffende Decklage (34a) vorsteht, und dass der Versteifungsabschnitt (22) in den Erhebungsabschnitt (18) übergeht.

2. Strukturbauteil (10) nach Anspruch 1, **dadurch gekennzeichnet, dass** das erste thermoplastische Kunststoffmaterial faserverstärkt ist.

3. Strukturbauteil (10) nach Anspruch 2, **dadurch gekennzeichnet, dass** das erste thermoplastische Kunststoffmaterial Langfasern aus Glas enthält, wobei die Glasfasern vorzugsweise eine Länge von etwa 1 bis 50 mm, insbesondere 1 bis 10 mm aufweisen.

4. Strukturbauteil (10) nach einem der vorhergehenden Ansprüche, **dadurch gekennzeichnet, dass** das zweite thermoplastische Kunststoffmaterial Endlosfasern enthält, wobei insbesondere Glasfasern, oder/und Karbonfasern oder/und Aramidfasern oder/und Naturfasern enthalten sind.

5. Strukturbauteil (10) nach Anspruch 4, **dadurch gekennzeichnet, dass** die Decklagen (34a, 34b) aus einem Faserhalbzeug, insbesondere einem Organoblech, oder/und wenigstens einer Schicht eines UD-Tapes hergestellt sind.

6. Strukturbauteil (10) nach einem der vorhergehenden Ansprüche, **dadurch gekennzeichnet, dass** das erste Kunststoffmaterial und das zweite Kunststoffmaterial bezüglich ihrer Materialeigenschaften kompatibel zueinander sind, wobei insbesondere im Falle der faserverstärkten Kunststoffmaterialien die jeweilige Kunststoffmatrix aus dem gleichen Material hergestellt ist, insbesondere aus Polypropylen (PP) oder Polyamid (PA) hergestellt ist.

7. Strukturbauteil (10) nach einem der vorhergehenden Ansprüche, **dadurch gekennzeichnet, dass** der Erhebungsbereich (18) eine Durchgangsöffnung (20) aufweist, die dazu eingerichtet ist, ein Verbindungselement aufzunehmen, das zur Befestigung des Unterbodenschutzelements (10) an einer Fahrzeugkarosserie (40, 44) vorgesehen ist.

8. Strukturbauteil (10) nach einem der vorhergehenden Ansprüche, **dadurch gekennzeichnet, dass** zwischen zwei Erhebungsabschnitten (18) wenigstens ein Versteifungsabschnitt (22) ausgebildet ist.

9. Kraftfahrzeug (41), insbesondere Elektrofahrzeug, mit einer Karosserie (40, 44) und einem an der Karosserie (40, 44) befestigten Strukturbauteil (10) gemäß einem der vorhergehenden Ansprüche, wobei vorzugsweise das Strukturbauteil als Unterbodenschutzelement (10) unterhalb von Energiespeichern angeordnet ist, insbesondere von einer Hochvoltbatterie (42) oder von einem Drucktank.

10. Verfahren (500) zur Herstellung eines Strukturbauteils, insbesondere Unterbodenschutzelements (10), umfassend die Schritte:
Einbringen (S502) eines ersten thermoplastischen Kunststoffmaterials, das als ungeformte, insbesondere spritzgussfähige oder fließpressfähige, Kunststoffmaterialmasse bereitgestellt wird (S501), zwischen einer unteren und einer oberen Decklage (34a, 34b) aus einem zweiten faserverstärkten, thermoplastischen Kunststoffmaterial;
gemeinsames Umformen (S503) des ersten Kunststoffmaterials und der Decklagen (34a, 34b), wobei beim gemeinsamen Umformen das erste Kunststoffmaterial zwischen den Decklagen (34a, 34b) verteilt wird, derart dass es nach dem Umformen ein Kernelement (32) bildet, das zumindest bereichsweise beidseitig von den Decklagen (34a, 34b) abgedeckt ist,
wobei das Einbringen des ersten Kunststoffmaterials durch ein Spritzgussverfahren (S503b) erfolgt, bei dem das Kunststoffmaterial zwischen die Decklagen (34a, 34b) eingespritzt wird,
wobei das erste Kunststoffmaterial beim Einspritzen zwischen die Decklagen (34a, 34b) oder nach dem Einspritzen zwischen die Decklagen (34a, 34b) physikalisch oder chemisch geschäumt wird (S505),
wobei das Schäumen nach dem Einspritzen des ersten Kunststoffmaterials durch Expansionsschäumen (S505) erfolgt, wobei betreffende Press- oder Gusswerkzeugelemente, insbesondere Werkzeughälften (50a, 50b), oder Teile davon, nach dem Einspritzen des ersten Kunststoffmaterials voneinander weg bewegt werden (S506),
**dadurch gekennzeichnet, dass** auf wenigstens eine der Decklagen (34a, 34b) ein von der betreffenden Decklage (34a, 34b) vorstehendes Versteifungselement (22) mittels Spritzgussverfahren mit oder ohne Schäumen aufgebracht wird (S507),
wobei das auf der betreffenden Decklage (34a, 34b) aufgebrachte Versteifungselement (22) aus dem gleichen Kunststoffmaterial wie das Kernelement (32) hergestellt wird.

11. Verfahren (500) nach Anspruch 10, wobei dem ersten thermoplastischen Kunststoffmaterial vor dem Einbringen zwischen die Decklagen Langfasern aus Glas beigemengt werden (S504).

12. Verfahren (500) nach einem der Ansprüche 10 bis 11, wobei die betreffenden Press- oder Gusswerkzeugelemente (50a, 50b) um etwa 0,5 bis 10 mm, insbesondere 1 bis 5 mm, voneinander weg bewegt werden.

13. Verfahren (500) nach einem der Ansprüche 10 bis 12,
wobei dem Kunststoffmaterial des aufgebrachten Versteifungselements (22) andere Anteile von Glasfasern oder Mineralien oder elastische Materialien beigemengt werden als dem ersten Kunststoffmaterial des Kernelements (32).

## Claims

1. Flat structure component (10), in particular an underfloor protection element (10), for a motor vehicle (41), in particular an electric vehicle, with
a flat configured core element (32) made of a first thermoplastic material,
at least one lower and one upper cover layer (34a, 34b) made of a second fibre-reinforced thermoplastic material, wherein the cover layers (34a, 34b) are formed and bonded in a material fit to the core element (32), which is produced from an injection moulding compound located between the cover layers (34a, 34b) or a flow moulding compound located between the cover layers (34a, 34b),
wherein the structure component (10) has at least one peripheral region (16), which is formed only from the first plastic material and is configured as being of one piece with the core element (32) located between the cover layers (34a, 34b), and
wherein several passage openings (26) are provided in the peripheral region (16), which are arranged such as to accommodate a connecting element, which is provided in order to secure the structure component (10) to a vehicle body (40),
wherein it comprises at least one elevating section (18) which is formed in the core element (32) and is of one piece with the cover layers (34a, 34b),
**characterized in that** it comprises at least one rib-type bracing section (22), wherein the bracing section (22) is formed from the first thermoplastic material, and wherein the bracing section (22) is formed on one of the cover layers (34a) and projects over the respective cover layer (34a), and the bracing section (22) transfers into the elevating section (18).

2. Structure component (10) according to claim 1, **characterized in that** the first thermoplastic material is fibre-reinforced.

3. Structure component (10) according to claim 2, **characterized in that** the first thermoplastic material contains long fibres of glass, wherein the glass fibres preferably have a length of some 1 to 50 mm, in particular 1 to 10 mm.

4. Structure component (10) according to any one of the preceding claims, **characterized in that** the second thermoplastic contains endless fibres, contained in which in particular are glass fibres and/or carbon fibres and/or aramid fibres and/or natural fibres.

5. Structure component (10) according to claim 4, **characterized in that** the cover layers (34a, 34b) are made from a fibre semi-finished product, in particular an organic sheet, and/or at least one layer of a UD tape.

6. Structure component (10) according to any one of the preceding claims, **characterized in that** the first plastic material and the second plastic material are compatible with one another in respect of their material properties, wherein, in the case of the fibre-reinforced plastic materials in particular, the respective plastic matrix is produced from the same material, in particular from polypropylene (PP) or polyamide (PA).

7. Structure component (10) according to any one of the preceding claims, **characterized in that** the elevating section (18) has a passage opening (20), which is arranged such as to receive a connection element, which is provided in order to secure the underfloor protection element (10) to a vehicle body (40, 44).

8. Structure component (10) according to any one of the preceding claims, **characterized in that** at least one bracing section (22) is formed between two elevating sections (18).

9. Motor vehicle (41), in particular an electric vehicle, with a body (40, 44) and a structure component (10) secured to the body (40, 44), according to any one of the preceding claims, wherein preferably the structure component, as an underfloor protection element (10), is preferably arranged beneath energy storage units, in particular a high voltage battery (42) or a pressure tank.

10. Method (500) for producing a structure component, in particular an underfloor protection element (10), comprising the steps:
Introduction (S502) of a first thermoplastic material, which, as a non-formed plastic material compound, in particular such as can be injection-moulded or flow-moulded, is provided (S501) between a lower and an upper cover layer (34a, 34b) of a second fibre-reinforced thermoplastic material;
common forming (S503) of the first plastic material and of the cover layers (34a, 34b), wherein, during the common forming, the first plastic material is divided between the cover layers (34a, 34b), in such a way that, after the forming, a core element (32) forms, which is covered at least in sections on both sides by the cover layers (34a, 34b),
wherein the introduction of the first plastic material takes place by an injection-moulding process (S503b), during which the plastic material is injected between the cover layers (34a, 34b),
wherein, during the injection between the cover layers (34a, 34b) or after the injection between the cover layers (34a, 34b), the first plastic material is foamed (S505), physically or chemically, between the cover layers (34a, 34b),
wherein the foaming takes place after the injection of the first plastic material by expansion foaming (S505), wherein pressing or casting mould elements involved, in particular mould halves (50a, 50b), or parts of them, are moved (S506) apart from one another after the injection of the first plastic material,
**characterized in that** a bracing element (22), projecting onto at least one of the cover layers (34a, 34b), is applied (S507) by means of an injection-moulding process, with or without foaming,
wherein the bracing element (22) applied on the cover layer (34a, 34b) concerned is produced from the same bracing plastic material as the core element (32).

11. Method (500) according to claim 10, wherein long fibres of glass are mixed (S504) into the first thermoplastic material before introduction between the cover layers.

12. Method (500) according to any one of claims 10 to 11, wherein the press or casting mould elements (50a, 50b) are moved apart from one another by some 0.5 to 10 mm, in particular 1 to 5 mm.

13. Method (500) according to any one of claims 10 to 12, wherein other proportions of glass fibres or minerals or elastic materials are mixed into the plastic material of the applied bracing element (22) than into the first plastic material of the core element (32).

## Revendications

1. Élément protecteur de dessous de caisse (10), pour un véhicule automobile (41), en particulier véhicule électrique, comprenant
un élément de noyau (32) de forme plane en un premier matériau synthétique thermoplastique,
au moins une couche de revêtement inférieure et une couche de revêtement supérieure (34a, 34b) en un deuxième matériau synthétique thermoplastique renforcé par fibres, dans lequel les couches de revêtement (34a, 34b) sont façonnées avec l'élément de noyau (32) et sont reliées par matière à celui-ci, lequel élément est fabriqué en une masse moulée par injection reçue entre les couches de revêtement (34a, 34b) ou en une masse extrudée reçue entre les couches de revêtement (34a, 34b),
dans lequel l'élément protecteur de dessous de caisse (10) présente au moins une zone de bordure (16) qui est formée uniquement en le premier matériau synthétique et est formée d'un seul tenant avec l'élément de noyau (32) reçu entre les couches de revêtement (34a, 34b), et
dans lequel, dans la zone du bord (16), plusieurs ouvertures de passage (26) sont prévues qui sont ménagées pour recevoir un élément de liaison qui est prévu pour la fixation de l'élément protecteur de dessous de caisse (10) à une carrosserie d'automobile (40),
il comporte au moins une section de bossage (18) formée conjointement dans l'élément de noyau (32) et les couches de revêtement (34a, 34b),
**caractérisé en ce qu'**il comporte au moins une section de raidissement (22) du type à nervures, dans lequel la section de raidissement (22) est formée en le premier matériau synthétique et dans lequel la section de raidissement (22) est formée sur l'une des couches de revêtement (34a) et dépasse de la couche de revêtement (34a) en question, et que la section de bossage (18) est dans la continuité de la section de raidissement (22).

2. Élément protecteur de dessous de caisse (10) selon la revendication 1, **caractérisé en ce que** le premier matériau synthétique thermoplastique est renforcé par fibres.

3. Élément protecteur de dessous de caisse (10) selon la revendication 2, **caractérisé en ce que** le premier matériau synthétique thermoplastique contient des fibres longues en verre, dans laquelle les fibres de verre présentent de préférence une longueur d'environ 1 à 50 mm, en particulier de 1 à 10 mm.

4. Élément protecteur de dessous de caisse (10) selon l'une des revendications précédentes, **caractérisé en ce que** le deuxième matériau synthétique thermoplastique contient des fibres infinies, dans lequel sont contenues en particulier des fibres de verre, ou/et des fibres de carbone ou/et des fibres d'aramide ou/et des fibres naturelles.

5. Élément protecteur de dessous de caisse (10) selon la revendication 4, **caractérisé en ce que** les couches de revêtement (34a, 34b) sont fabriquées à partir d'un semi-produit de fibres, en particulier d'une feuille organique, ou/et d'au moins une couche d'un ruban UD.

6. Élément protecteur de dessous de caisse (10) selon l'une des revendications précédentes, **caractérisé en ce que** le premier matériau synthétique et le deuxième matériau synthétique sont compatibles l'un avec l'autre en ce qui concerne leurs propriétés de matériau, dans laquelle en particulier dans le cas des matériaux synthétiques renforcés par fibres, la matrice de matériau synthétique respective est fabriquée en le même matériau, en particulier est fabriquée en polypropylène (PP) ou polyamide (PA).

7. Élément protecteur de dessous de caisse (10) selon l'une des revendications précédentes, **caractérisé en ce que** la zone de bossage (18) présente une ouverture de passage (20) qui est ménagée pour recevoir un élément de liaison prévu pour la fixation de l'élément protecteur de dessous de caisse (10) à une carrosserie d'automobile (40, 44).

8. Élément protecteur de dessous de caisse (10) selon l'une des revendications précédentes, **caractérisée en ce qu'**entre deux sections de bossage (18) est formée au moins une section de raidissement (22).

9. Véhicule automobile (41), en particulier véhicule électrique, comprenant une carrosserie (40, 44) et un élément protecteur de dessous de caisse (10) selon l'une des revendications précédentes fixé à la carrosserie (40, 44) qui est disposé au-dessous d'une batterie haute tension (42) ou d'un réservoir de pression.

10. Procédé (500) pour la fabrication d'un élément protecteur de dessous de caisse (10) selon l'une des revendications précédentes, comprenant les étapes :
placer (S502) un premier matériau synthétique thermoplastique, qui est fourni (S501) sous la forme d'une masse de matériau synthétique non façonnée, en particulier apte à être moulée par injection ou à être extrudée, entre des couches de revêtement inférieure et supérieure (34a, 34b) en un deuxième matériau synthétique thermoplastique renforcé par fibres ;
façonner conjointement (S503) le premier matériau synthétique et les couches de revêtement (34a, 34b), dans lequel lors du façonnage conjoint, le premier matériau synthétique est réparti entre les couches de revêtement (34a, 34b), de telle sorte qu'il forme après le façonnage un élément de noyau (32) qui est au moins par zones recouvert des deux côtés par les couches de revêtement (34a, 34b),
dans lequel au moins une section de bossage (18) est formée conjointement dans l'élément de noyau (32) et les couches de revêtement (34a, 34b),
dans lequel la mise en place du premier matériau synthétique se fait par un procédé de moulage par injection (S503b) avec lequel le matériau synthétique est injecté entre les couches de revêtement (34a, 34b),
dans lequel le premier matériau synthétique, lors de l'injection entre les couches de revêtement (34a, 34b) ou après l'injection entre les couches de revêtement (34a, 34b), est soumis à un moussage (S505) physique ou chimique,
dans lequel le moussage après l'injection du premier matériau synthétique se fait par moussage d'expansion (S505), dans lequel les éléments d'outil d'extrusion ou d'injection concernés, en particulier des moitiés d'outil (50a, 50b), ou des parties de celles-ci, sont éloignés l'un de l'autre (S506) après l'injection du premier matériau synthétique,
**caractérisé en ce que** sur l'une au moins des couches de revêtement (34a, 34b), un élément de raidissement (22) dépassant de la couche de revêtement (34a, 34b) concernée est appliqué (S507) par injection avec ou sans moussage, dans la continuité duquel se trouve la section de bossage (18),
dans lequel l'élément de raidissement (22) appliqué sur la couche de revêtement (34a, 34b) concernée est fabriqué en le même matériau synthétique que l'élément de noyau (32) est la section de bossage (18).

11. Procédé (500) selon la revendication 10, dans lequel on mélange (S504) au premier matériau synthétique thermoplastique, avant de le placer entre les couches de revêtement, des fibres longues en verre.

12. Procédé (500) selon l'une des revendications 10 à 11, dans lequel les éléments d'outil d'extrusion ou d'injection (50a, 50b) concernés sont éloignés l'un de l'autre d'environ 0,5 à 10 mm, en particulier de 1 à 5 mm.

13. Procédé (500) selon l'une des revendications 10 à 12,
dans lequel on mélange au matériau synthétique de l'élément de raidissement (22) posé d'autres proportions de fibres de verre ou de minéraux ou des matériaux élastiques qu'au premier matériau synthétique de l'élément de noyau (32).
